# EUROPÄISCHE PATENTANMELDUNG

(11) **EP 4 545 386 A1**
(43) Veröffentlichungstag der Anmeldung: **30.04.2025**
(21) Anmeldenummer: 24207123.1
(22) Anmeldetag: 17.10.2024
(51) Int. Cl.: B62J 1/06, B62J 1/08, B62J 1/02

(54) **SATTELSTÜTZE**

(30) Priorität: 23.10.2023 DE 202023106110 U
(71) Anmelder: Canyon Bicycles GmbH, 56073 Koblenz (DE)
(72) Erfinder: Sommer, Nils, 53173 Bonn (DE); Adomeit, Michael, 56068 Koblenz (DE); Rüter, Caspar, 50677 Köln (DE)
(74) Vertreter: dompatent von Kreisler Selting Werner - Partnerschaft von Patent- und Rechtsanwälten mbB

(57) **Zusammenfassung**

Eine Sattelstütze, die insbesondere für Rennräder geeignet ist, weist einen Sattelstützkopf (10) zum Tragen eines Sattels auf. Ferner weist die Sattelstütze ein Sattelstützrohr (12) zum Verbinden mit einem Fahrradrahmen auf. Der Sattelstützkopf (10) ist gegenüber dem Sattelstützrohr (12) insbesondere in Richtung des Pfeils (18) bewegbar. Zum Federn und/oder Dämpfen dieser Bewegung ist zwischen dem Sattelstützkopf (10) und dem Sattelstützrohr (12) ein Feder- und/oder Dämpfungselement (30,50) angeordnet.

## Beschreibung

Die Erfindung betrifft eine Sattelstütze, insbesondere für Rennräder.

Insbesondere zur Verbesserung des Komforts sind unterschiedliche Arten von Sattelstützen bekannt. Beispielsweise sind zur Verbesserung des Komforts elastisch verformbare Sattelstützen bekannt, die zumindest teilweise aus einem verformbaren Material bestehen und beispielsweise unterschiedliche Querschnitte aufweisen. Die mit derartigen Sattelstützen erzielbare Komfortverbesserung ist begrenzt. Ferner sind mehrteilige Sattelstützen bekannt, bei denen einzelne Bauteile der Sattelstützen zueinander bewegbar sind. Beispielsweise ist aus EP 2 415 657 eine zweiteilige Sattelstütze bekannt, die im Wesentlichen in Längsrichtung zwei getrennte Sattelstütz-Elemente aufweist. Diese sind jeweils mit dem Sattel verbunden, so dass eine Bewegung des Sattels durch Verformen der beiden Sattelstütz-Elemente möglich ist. Dies führt zu einer Dämpfung von durch den Untergrund hervorgerufenen Schlägen u.dgl. Ferner sind mehrteilige Sattelstützen mit integrierten Spiralfedern oder anderen Dämpfungselementen bekannt. Derartige Sattelstützen weisen jedoch den Nachteil auf, dass der Aufbau komplex ist, derartige Sattelstützen relativ schwer sind und ggf. einem hohen Verschleiß unterliegen bzw. wartungsintensiv sind.

Aufgabe der Erfindung ist es, eine Sattelstütze zu schaffen, mit der der Sitzkomfort verbessert werden kann.

Die Lösung der Aufgabe erfolgt erfindungsgemäß durch eine Sattelstütze mit den Merkmalen des Anspruchs 1.

Die erfindungsgemäße Sattelstütze, die insbesondere für Rennräder, Triathlonräder u.dgl. geeignet ist, weist einen Sattelstützkopf sowie ein Sattelstützrohr auf. Der Sattelstützkopf dient zum Tragen eines Sattels, wobei der Sattel mittelbar oder unmittelbar mit dem Sattelstützkopf verbunden sein kann. Auch kann der Sattelstützkopf einstückig mit dem gesamten Sattel oder einstückig mit dem Sattelgestell ausgebildet sein. Das Sattelstützrohr dient zum Verbinden mit einem Fahrradrahmen. Beispielsweise kann das Sattelstützrohr am und insbesondere im Sattelrohr des Fahrradrahmens befestigt werden. Dies kann durch eine Klemmverbindung o.dgl. erfolgen. Auch kann das Sattelstützrohr einstückig mit dem Fahrradrahmen, insbesondere einstückig mit dem Sattelrohr, ausgebildet sein. Der Sattelstützkopf ist gegenüber dem Sattelstützrohr beweglich. Insbesondere handelt es sich um zwei gesonderte Bauteile, die zueinander in einer Rahmenmittelebene beweglich sind. Ferner weist die erfindungsgemäße Sattelstütze ein Feder- und/oder Dämpfungselement auf. Insbesondere wenn der Sattelstützkopf gegenüber dem Sattelstützrohr beweglich ist, stellt das Feder- und/oder Dämpfungselement die vorzugsweise einzige Verbindung zwischen diesen beiden Bauteilen dar. Das Feder- und/oder Dämpfungselement dient je nach Ausgestaltung zum Dämpfen einer Bewegung zwischen dem Sattelstützkopf und dem Sattelstützrohr und/oder federt diese Bewegung ab. Hierdurch werden Unebenheiten des Untergrundes durch die erfindungsgemäße Sattelstütze abgefedert bzw. gedämpft, so dass der Sitzkomfort verbessert ist.

Das Feder- und/oder Dämpfungselement ist vorzugsweise mit dem Sattelstützrohr und/oder dem Sattelstützkopf insbesondere fest verbunden. Hierzu können die einzelnen Bauteile des Feder- und/oder Dämpfungselement beispielsweise in Ausnehmungen eingesteckt, eingeklebt oder auf andere Weise verbunden sein. Besonders bevorzugt ist es, dass es sich bei dem mindestens einen Federelemente um eine Blattfedern handelt, wobei vorzugsweise mehrere Federelemente und/oder mehrere Federpakete vorgesehen sein können. Bevorzugt ist es insbesondere, dass das Feder- und/oder Dämpfungselement mindestens zwei Federelemente aufweist. Besonders bevorzugt ist es, dass die mindestens zwei Federelemente zueinander parallelgeschaltet sind. In besonders bevorzugter Ausführungsform weist das Feder- und/oder Dämpfungselement somit mindestens zwei zueinander parallel verlaufende Blattfedern, insbesondere Blattfederpakete, auf. Ggf. kann zwischen den einzelnen Federelementen ein beispielsweise als Elastomerkörper ausgebildetes Dämpfungselement vorgesehen sein.

Besonders bevorzugt ist es, dass eine Längsrichtung der Feder- und/oder Dämpfungselemente, insbesondere der als Blattfeder oder Blattfederpakete ausgebildeten Federelemente, im Wesentlichen senkrecht zu einer Stoßrichtung verläuft. Die Stoßrichtung ist die Richtung, in der beispielsweise durch Unebenheiten hervorgerufene Stöße auf die Federelemente übertragen werden. Dies ist insbesondere auch von der Rahmengeometrie abhängig, sodass für unterschiedliche Rahmengeometrien unterschiedlich ausgebildete Sattelstützen vorteilhaft sein können. Die Längsrichtung der Blattfedern ist vorzugsweise geneigt, insbesondere in Fahrtrichtung, bzw. in Rahmenlängsrichtung fallen geneigt.

Die Längsrichtung der Federelemente ist vorzugsweise in einem Winkel zur Vertikalen angeordnet. In montiertem Zustand ist es besonders bevorzugt, dass die Federelemente von einem unteren Befestigungspunkt zu einem oberen Befestigungspunkt entgegen der Fahrtrichtung nach hinten verlaufen bzw. nach hinten geneigt sind. Der untere Befestigungspunkt ist hierbei vorzugsweise mit dem Sattelstützrohr und der obere Befestigungspunkt mit dem Sattelstützkopf verbunden und insbesondere zur Aufnahme der Enden der Blattfedern bzw. Blattfederpakete ausgebildet. Das Gewicht des Fahrers, das im Wesentlichen vertikal nach unten auf den Sattel drückt, bewirkt somit ein Verformen der Blattfedern entgegen der Fahrtrichtung.

Bei einer weiteren bevorzugten Ausführungsform der Erfindung ist das Feder- und/oder Dämpfungselement zumindest teilweise, insbesondere vollständig, in einem Hohlraum angeordnet. Insofern ist das Feder- und/oder Dämpfungselement innenliegend angeordnet. Das Feder- und/oder Dämpfungselement ist somit in bevorzugter Ausführungsform nicht oder zumindest nur teilweise sichtbar. Insbesondere ist das Feder- und/oder Dämpfungselement somit auf einfache Weise vor Verschmutzungen geschützt. Der Hohlraum ist vorzugsweise von dem Sattelstützkopf und/oder dem Sattelstützrohr ausgebildet. Besonders bevorzugt ist es, dass ein Teil des Hohlraums innerhalb des Sattelstützkopfes und ein Teil des Hohlraums innerhalb des Sattelstützrohrs angeordnet ist. Innerhalb dieses gemeinsamen Hohlraums ist in bevorzugter Ausführungsform das Feder- und/oder Dämpfungselement angeordnet.

Ferner kann ein Begrenzungselement zur Begrenzung der Bewegung des Sattelstützkopfes gegenüber dem Sattelstützrohr vorgesehen sein. Durch ein derartiges Begrenzungselement ist ein Überlastschutz für das Feder- und/oder Dämpfungselement ausgebildet. Vorzugsweise weist das Begrenzungselement einen Ansatz auf, der mit einem Anschlag zusammenwirkt. Hierbei kann der Ansatz mit dem Sattelstützrohr oder dem Sattelstützkopf verbunden, insbesondere einstückig ausgebildet sein und der Anschlag entsprechend mit dem jeweils anderen Bauteil verbunden, insbesondere einstückig ausgebildet, sein. Vorzugsweise ist der Ansatz derart ausgebildet bzw. angeordnet, dass er in eine Ausnehmung ragt. Eine Wand oder Begrenzung der Ausnehmung dient sodann als Anschlag. Besonders bevorzugt ist es hierbei, dass die Ausnehmung durch den Hohlraum bzw. eines Teils des Hohlraums ausgebildet ist. Bei einer bevorzugten Weiterbildung der Erfindung kann das Begrenzungselement ein Dämpfungselement aufweisen. Hierdurch ist ein hartes Anschlagen oder ein hierdurch ggf. hervorgerufenes Beschädigen des Begrenzungselements vermieden. Ein derartiges beispielsweise als Elastomerkörper ausgebildetes Dämpfungselement kann zwischen dem Ansatz und dem Anschlag ausgebildet sein.

Vorzugsweise ist ein Vorspannelement vorgesehen, das auf das Feder- und/oder Dämpfungselement einwirkt. Hierdurch kann eine insbesondere feine Justage der Federcharakteristik erfolgen.

Nachfolgend wird die Erfindung anhand bevorzugter Ausführungsformen unter Bezugnahme auf die anliegenden Zeichnungen näher erläutert.

Es zeigen:
- Fig. 1: eine schematische Seitenansicht einer erfindungsgemäßen Sattelstütze in unbelastetem Zustand,
- Fig. 2: eine schematische Seitenansicht einer erfindungsgemäßen Sattelstütze in belastetem Zustand,
- Fig. 3: einen schematischen Längsschnitt der Sattelstütze gemäß Fig. 1,
- Fig. 4: einen schematischen Längsschnitt der Sattelstütze gemäß Fig. 2 und
- Fig. 5: eine weitere Ausführungsform einer erfindungsgemäßen Sattelstütze in Seitenansicht, wobei es sich ebenfalls um einen Längsschnitt handelt.

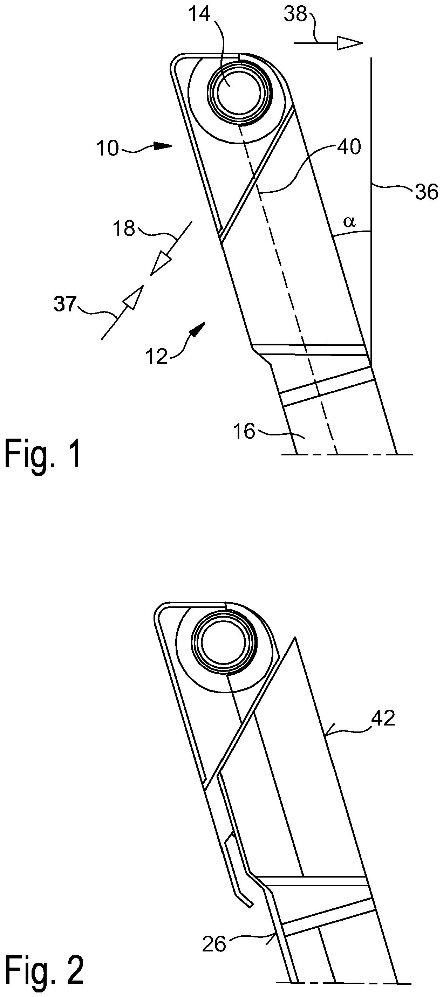

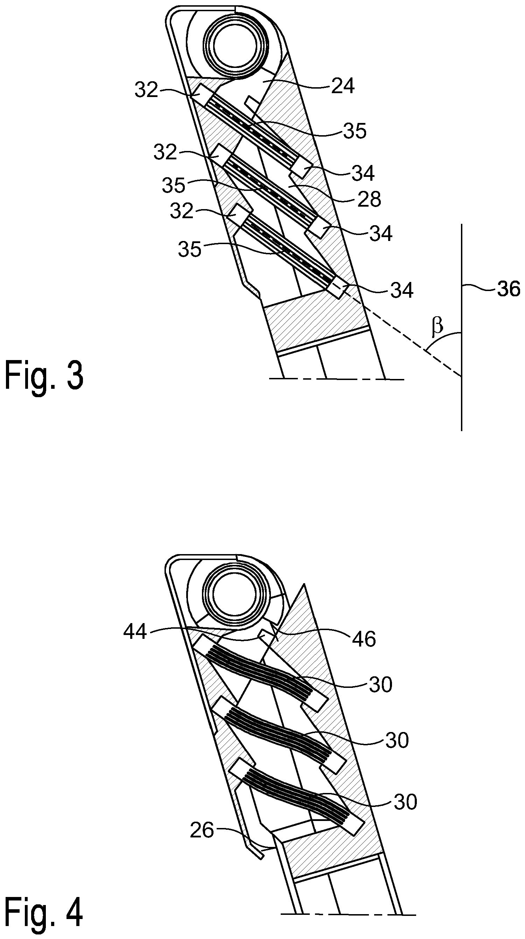

In einem unbelasteten Zustand, in dem der Sattel nicht einfedert bzw. nur durch das Gewicht des Benutzers belastet ist, weist die erfindungsgemäße Sattelstütze den in den Fign. 1 und 3 dargestellten Zustand auf. In einem belasteten Zustand weist die Sattelstütze den in den Fign. 2 und 4 beispielhaft dargestellten Zustand auf.

Die Sattelstütze weist einen Sattelstützkopf 10 sowie ein Sattelstützrohr 12 auf. Der Sattelstützkopf 10 dient zur Verbindung mit einem Sattel oder ist beispielsweise einstückig mit einem Sattel verbunden. Im dargestellten Ausführungsbeispiel erfolgt ein Verbinden mit einem Sattelgestell durch ein Zwischenelement, das in einer Öffnung 14 des Sattelstützkopf befestigbar ist. Das Sattelstützrohr 12 wird beispielsweise mit dem unteren Ende 16 in ein Sattelrohr eines Fahrradrahmens gesteckt und dort mit Hilfe eines Klemmelements, wie einer Klemmschelle o.dgl., fixiert. Hierbei sind auch andere bekannte Befestigungsmöglichkeiten möglich. Auch eine einstückige Ausgestaltung des Sattelstützrohrs mit einem Bauteil des Fahrradrahmens, insbesondere dem Sattelrohr, ist möglich.

Der Sattelstützkopf 10 ist aus der unbelasteten Position (Fign. 1 und 3) in Richtung eines Pfeils 18 in eine belastete Position (Fign. 2 und 4) bewegbar. Hierbei ist eine stufenlose Bewegung in Richtung des Pfeils 18 möglich.

Der Sattelstützkopf weist eine in Richtung des Sattelstützrohrs 12 weisende Öffnung auf, die einen Hohlraum 24 ausbildet. Dem Hohlraum 24 gegenüberliegend weist das Sattelstützrohr 12 eine in Richtung des Sattelstützkopfs 10 sowie in Richtung einer Rückseite 26 offene Öffnung auf, die einen Hohlraum 28 ausbildet. Innerhalb dieses gemeinsamen Hohlraums 24, 28 ist ein Feder- und/oder Dämpfungselement angeordnet, das im dargestellten Ausführungsbeispiel drei Blattfederpakete 30 aufweist. Die drei Blattfederpakete 30 weisen mehrere einzelne Blattfedern auf und sind zueinander parallel angeordnet. Die jeweils oberen Enden 32 der Blattfederpakete 30 sind mit dem Sattelstützkopf und die jeweils unteren Enden 34 der Blattfederpakete 30 sind mit dem Sattelstützrohr fest verbunden.

Beispielsweise beim Überfahren von Bodenunebenheiten erfolgt somit ein Verschieben des Sattelstützkopfs in Richtung des Pfeils 18 aus der unbelasteten in die belastete Position. Hierbei werden die Federelemente 30, wie in Fig. 4 dargestellt, verformt, so dass eine Dämpfung erfolgt und der durch die Unebenheit erzeugte Schlag (Stoßrichtung 37) zumindest nur teilweise in den Sattel übertragen wird. Hierdurch ist der Sitzkomfort erheblich verbessert. Sobald wieder eine Entlastung erfolgt, d.h. die Unebenheit überfahren ist, wird auf Grund der verformten Federn 30 der Sattelstützkopf 10 wieder in die unbelastete Position zurückbewegt.

Unabhängig von dem in den Fign. 1 bis 4 dargestellten Ausführungsbeispiel weist das Sattelstützrohr 12 gegenüber einer Vertikalen 36 einen Winkel o im Bereich von 10 bis 25°. Hierbei ist das Sattelstützrohr bezogen auf eine Fahrtrichtung 38 nach hinten geneigt bzw. entgegen der Fahrtrichtung 38 geneigt. Eine Längsrichtung 35 der Federelemente 30 weist zur Vertikalen 36 einen Winkel β auf. Der Winkel β liegt im Bereich von 20° bis 90°, insbesondere 45° bis 75°.

Ferner weist die in den Fign. 1 bis 4 dargestellte erfindungsgemäße Sattelstütze ein Begrenzungselement auf, das die Bewegung des Sattelstützkopfs 10 in Richtung des Pfeils 18 relativ zu dem Sattelstützrohr 12 begrenzt. Hierzu weist im dargestellten Ausführungsbeispiel das Begrenzungselement einen Ansatz 44 auf. Der Ansatz 44 ragt in den Hohlraum 24 des Sattelstützkopfs 10. Eine Wand 46 des Hohlraums 24 dient als Anschlag. Ggf. kann zwischen dem Ansatz 44 und dem Anschlag 46 ein nicht dargestellter Elastomerkörper zur Dämpfung angeordnet sein.

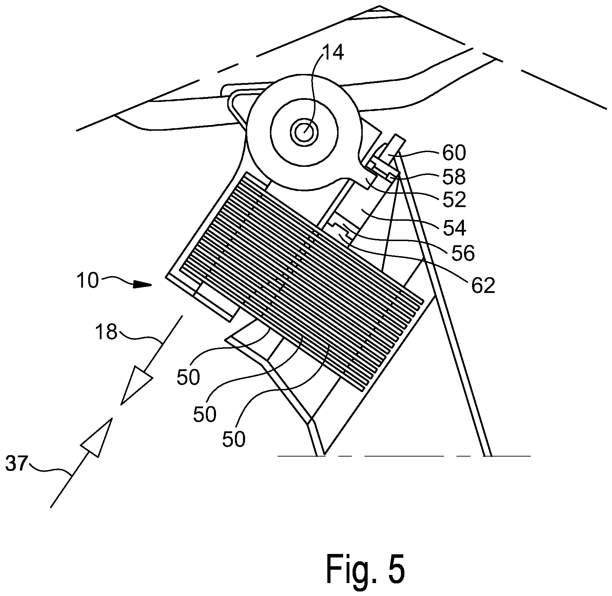

In der in Fig. 5 dargestellten weiteren Ausführungsform sind identische und ähnliche Bauteile mit denselben Bezugszeichen gekennzeichnet.

Ein wesentlicher Unterschied der in Fig. 5 dargestellten Ausführungsform besteht darin, dass anstelle dreier Blattfederpakete 30 einzelne Blattfedern 50 parallel zueinander angeordnet. Entsprechend der Blattfederpakete 30 sind die Enden der Blattfedern 50 mit dem Sattelstützkopf 10 bzw. dem Sattelstützrohr 12 fest verbunden.

Ein weiterer Unterschied besteht darin, dass ein Ansatz 52 des Begrenzungselements mit dem Sattelstützkopf 10 verbunden ist und in eine Ausnehmung 54, die im Sattelstützrohr 14 vorgesehen ist, ragt. In der Ausnehmung 54 sind Anschläge 56 vorgesehen, die jeweils zur Dämpfung als Elastomerkörper ausgebildet sind. Ferner ist in der Ausnehmung 54 ein Vorspannelement 58 angeordnet. Dieses ist auf der einen Seite mit einer Stellschraube 60 versehen und drückt auf der gegenüberliegenden Seite 62 auf die Blattfedern 52. Von der Stellschraube 60 kann somit eine Vorspannung erfolgen. Durch ein Vorspannen des Federelements ist vermieden, dass jeder kleine Stoß unmittelbar abgefedert wird und zu einem häufigen Bewegen des Sattels führen würde. Durch das Vorspannelement kann ein Losbrechmoment eingestellt werden.

## Patentansprüche

1. Sattelstütze, insbesondere für Rennräder, mit
einem Sattelstützkopf (10) zum Tragen eines Sattels,
einem Sattelstützrohr (12) zum Verbinden mit einem Fahrradrahmen,
wobei der Sattelstützkopf (10) gegenüber dem Sattelstützrohr (12) beweglich ist, und
einem zwischen dem Sattelstützkopf (10) und dem Sattelstützrohr (12) angeordneten Feder- und/oder Dämpfungselement (30, 50).

2. Sattelstütze nach Anspruch 1, **dadurch gekennzeichnet, dass** das Sattelstützrohr (12) ausschließlich über das Feder- und/oder Dämpfungselement (30,50) mit dem Sattelstützkopf (10) verbunden ist.

3. Sattelstütze nach Anspruche 1 oder 2, **dadurch gekennzeichnet, dass** das Feder- und/oder Dämpfungselement (30,50) mit dem Sattelstützrohr (12) und/oder dem Sattelstützkopf (10) insbesondere fest verbunden ist.

4. Sattelstütze nach einem der Ansprüche 1 bis 3, **dadurch gekennzeichnet, dass** das Feder- und/oder Dämpfungselement (30,50) mindestens eine Blattfeder aufweist, insbesondere ausschließlich eine oder mehrere Blattfedern aufweist.

5. Sattelstütze nach einem der Ansprüche 1 bis 4, **dadurch gekennzeichnet, dass** das Feder- und/oder Dämpfungselement mindestens zwei Federelemente (30,50) aufweist, die vorzugsweise als Blattfeder ausgebildet sind.

6. Sattelstütze nach einem der Ansprüche 1 bis 5, **dadurch gekennzeichnet, dass** eine Längsrichtung (35) des Feder- und/oder Dämpfungselements (30,50) im Wesentlichen senkrecht zu einer Stoßrichtung (37) verläuft.

7. Sattelstütze nach einem der Ansprüche 1 bis 6, **dadurch gekennzeichnet, dass** eine Längsrichtung (35) des Feder- und/oder Dämpfungselements (30,50) zu einer vertikalen einen Winkel von 20° bis 90°, insbesondere 45° bis 75° aufweist.

8. Sattelstütze nach einem der Ansprüche 1 bis 7, **dadurch gekennzeichnet, dass** das Feder- und/oder Dämpfungselement (30,50) zumindest teilweise, insbesondere vollständig, in einem Hohlraum (24,28) angeordnet ist.

9. Sattelstütze nach Anspruch 8, **dadurch gekennzeichnet, dass** der Hohlraum (24,28) von dem Sattelstützkopf (10) und/oder dem Sattelstützrohr (12) ausgebildet ist.

10. Sattelstütze nach einem der Ansprüche 1 bis 9, **dadurch gekennzeichnet, dass** die Bewegung des Sattelstützkopfs (10) gegenüber dem Sattelstützrohr (12) von einem Begrenzungselement (44,46; 52,56) begrenzt ist.

11. Sattelstütze nach Anspruch 10, **dadurch gekennzeichnet, dass** das Begrenzungselement einen Ansatz (44,52) aufweist, der mit dem Sattelstützrohr (12) oder dem Sattelstützkopf (10) verbunden ist und vorzugsweise in eine Ausnehmung (24,54) im Sattelstützkopf (10) oder im Sattelstützrohr (12) ragt.

12. Sattelstütze nach Anspruch 11, **dadurch gekennzeichnet, dass** die Ausnehmung durch den Hohlraum (24) ausgebildet ist.

13. Sattelstütze nach einem der Ansprüche 10 bis 12, **dadurch gekennzeichnet, dass** das Begrenzungselement ein Dämpfungselement (56) aufweist.

14. Sattelstütze nach einem der Ansprüche 1 bis 13, **gekennzeichnet durch** ein insbesondere auf das Feder- und/oder Dämpfungselement (30,50) einwirkendes Vorspannelement (58,60,62).
